# Europäisches Patentamt

# European Patent Office

# Office européen des brevets

(19)

(11) Veröffentlichungsnummer: **0 197 333**
**B1**

(12) EUROPÄISCHE PATENTSCHRIFT

(45) Veröffentlichungstag der Patentschrift:
13.12.89

(51) Int. Cl.⁴: **G11B 5/008, G11B 5/588**

(21) Anmeldenummer: 86103154.0

(22) Anmeldetag: 08.03.86

(54) Verfahren zur Aufzeichnung eines Signals auf einen bandförmigen Aufzeichnungsträger.

(30) Priorität: 16.03.85 DE 3509584
14.05.85 DE 3517380

(43) Veröffentlichungstag der Anmeldung:
15.10.86 Patentblatt 86/42

(45) Bekanntmachung des Hinweises auf die Patenterteilung:
13.12.89 Patentblatt 89/50

(84) Benannte Vertragsstaaten:
AT BE CH DE FR GB IT LI LU NL SE

(56) Entgegenhaltungen:
EP-A- 0 020 176
EP-A- 0 156 960
CH-A- 329 439
DE-A- 2 007 955
DE-A- 2 532 047
GB-A- 1 476 819
US-A- 3 197 575
US-A- 3 423 743
US-A- 3 457 557
US-A- 3 465 320
US-A- 3 995 316
US-A- 4 354 211

IBM TECHNICAL DISCLOSURE BULLETIN, Band 22,
nr 4, September 1979, Seiten 1714-1716; Armonk, N.Y.,

(73) Patentinhaber: Deutsche Thomson-Brandt GmbH,
Postfach 1307, D-7730 Villingen-Schwenningen(DE)

(72) Erfinder: Keesen, Werner, Dr.-Ing., Tiestestrasse 5,
D-3000 Hannover(DE)
Erfinder: Oberjatzas, Günter, Dipl.-Ing.,
Langenkampstrasse 42, D-3013 Barsinghausen(DE)

(72) Erfinder: Schandl, Hartmut, Ing., Egerstrasse 2,
D-7730 Villingen-Schwenningen(DE)
Erfinder: Uhde, Dietmar, Ing., Weiherstrasse 11,
D-7744 Königsfeld(DE)
Erfinder: Platte, Hans-Joachim, Dr.-Ing., Königsberger
Weg, D-3005 Hemmingen 4(DE)
Erfinder: Hartnack, Wolfgang, Dipl.-Ing., Saarstrasse 22,
D-3005 Hemmingen 1(DE)
Erfinder: Habben, Dieter, Dipl.-Ing., Röntgenstrasse 13,
D-3000 Hannover 1(DE)
Erfinder: Schäfer, Ralf-Detlef, Dipl.-Ing., Im Bultfeld 44,
D-3005 Hemmingen 4(DE)
Erfinder: Peters, Hartmut, Dipl.-Ing., Wilh.
Bluhm-Strasse 37, D-3000 Hannover 91(DE)

(74) Vertreter: Einsel, Robert, Dipl.-Ing., Deutsche
Thomson-Brandt GmbH Patent- und Lizenzabteilung
Göttinger Chaussee 76, D-3000 Hannover 91(DE)

(56) Entgegenhaltungen: (Fortsetzung)

US E.W. PUGH: "New format video recorder"
IBM TECHNICAL DISCLOSURE BULLETIN, Band 25,
Nr 2, Juli 1982, Seiten 811-812; Armonk, N.Y., US J.K.
STEMWEDEL: "Track path for a rotary head"
IBM TECHNICAL DISCLOSURE BULLETIN, Band 17,
Nr 1, Juni 1974, Seite 228; Armonk, N.Y., US J.J.
HAGOPIAN: "High-track density magnetic tape
memory"
IEEE TRANSACTIONS ON MAGNETICS, Band MAG-17,
Nr 4, Juli 1981, Seiten 1432-1434; IEEE, New York, US A.
BRUCE MANILDI: "A low-cost, hifh-speed direct acces
device"
IEEE TRANSACTIONS ON MAGNETICS, Band MAG-17,
Nr 6, November 1981, Seiten 2529-2531; IEEE, New York
US R:E: DREWS u.a.: "High resolution recorder for
magnetic printing"
IBM TECHNICAL DISCLOSURE BULLETIN, Band 23,
Nr 1, Juni 1980, Seiten 307-308; Armonk, N.Y., US C.C.
ROSHON u.a.: "Rotary head tape device"
IBM TECHNICAL DISCLOSURE BULLETIN, Band 18,
Nr 12, Mai 1976, Seiten 3926-3930; Armonk, N.Y., US K.N.
KAROL u.a.: "Head/rotor control and maximization of
time/tape space utilization"

## Beschreibung

Die Erfindung geht aus von einem Verfahren zur Aufzeichnung eines Signals gemäß dem Oberbegriff des Anspruchs 1. Ein derartiges Verfahren ist bekannt durch IBM TDB, Band 22, Nr. 4, September 1979, Seite 1714–1716.

Für die Aufzeichnung breitbandiger Signale wie z.B. von einem analogen oder digitalen Bildsignal, einem digitalen Tonsignal und sonstigen breitbandigen Datensignalen mit nur einem jeweils mit dem Band in Kontakt befindlichen Abtastelement wird eine hohe Abtastgeschwindigkeit, d.h. Relativgeschwindigkeit zwischen dem Abtastelement, z.B. einem Magnetkopf, und dem Aufzeichnungsträger, z.B. einem Magnetband, benötigt. Diese Abtastgeschwindigkeit liegt beim heutigen Videorecorder in der Größenordnung von 300 cm pro Sekunde.

Bei dem sogenannten Querspurverfahren, das insbesondere für professionelle Videoaufzeichnung Verwendung findet, wird das Signal in Spuren aufgezeichnet, die etwa senkrecht zur Kante eines Magnetbandes verlaufen. Die Aufzeichnung und Abtastung erfolgt dabei mit einem rotierenden Kopfrad mit mehreren Köpfen, an das das konkav gewölbte Band angelegt ist. Bei dieser Lösung kann auf einer Querspur wegen deren geringen geometrischen Länge (gleich Breite des Bandes) nur ein relativ kurzer Signalteil von z.B. 16 Zeilen eines Fernsehbildes aufgezeichnet werden, so daß eine mehrfache Umschaltung zwischen Spurabschnitten während eines Bildes erforderlich ist.

Bei dem sogenannten Schrägspurverfahren werden die Signale entlang Spuren aufgezeichnet, die sich unter einem geringen Winkel von etwa 6–7° schräg zur Bandkante erstrecken. Wegen der erhöhten geometrischen Länge eines Spurabschnittes kann auf einem derartigen schräg zur Bandkante verlaufenden Spurabschnitt ein volles Halbbild eines Fernsehsignales aufgezeichnet werden. Diese Lösung wird insbesondere für Konsum-Videorecorder verwendet.

Die bekannten Lösungen haben verschiedene Nachteile bei der Aufzeichnung digitaler Signale, insbesondere eines digitalen Videosignals.

Videorecorder z.B. müssen Sonderbetriebsarten, sogenannte Trickmodi, wie z.B. Bildsuchlauf, Nachvertonung u.dgl. ermöglichen. Die Realisierung derartiger Trickmodi bringt bei der Aufzeichnung digitaler Signale erhebliche spezielle Probleme mit sich. Einerseits muß ein digitales Bildsignal bei der Aufzeichnung prinzipiell stärker segmentiert werden als ein Analogsignal, selbst wenn man sich auf dieselbe Spurlänge bezieht. Andererseits erweisen sich die von der Aufzeichnung eines Analogsignals her bekannten recht einfachen Lösungen wie z.B. das Kreuzen des Videokopfes beim Bildsuchlauf über mehrere Spuren bei der Aufzeichnung eines Digitalsignals als nicht anwendbar.

Durch das eingangs beschriebene bekannte Verfahren mit einem Aufzeichnungsmuster in Form von Blöcken können derartige spezielle Anforderungen insbesondere bei einem digitalen Signal besser erfüllt werden. Voraussetzung dafür ist, daß die Begrenzungslinien der Blöcke senkrecht oder annähernd senkrecht zur Trägerkante gerichtet sind. Diese Bedingung ist ohne weiteres nicht erfüllt, weil aufgrund der kontinuierlichen Bewegung des Bandes in seiner Längsrichtung ein Versatz aufeinanderfolgenden Spurabschnitte in Längsrichtung des Bandes auftritt.

Der Erfindung liegt die Aufgabe zugrunde, das bekannte Verfahren so weiterzubilden, daß der durch die Längsbewegung des Bandes an sich hervorgerufene Versatz aufeinanderfolgende Spurabschnitte ausgeglichen wird und die Begrenzungslinien der Blöcke auf dem Band annähernd senkrecht zur Trägerkante gerichtet sind.

Diese Aufgabe wird durch die im Anspruch 1 angegebenen Erfindung gelöst. Vorteilhafte Weiterbildungen der Erfindung sind in den Unteransprüchen angegeben.

Es ist auch Verfahren mit einer Aufzeichnung in Form von Blöcken bekannt (GB-PS 1 476 819), bei dem das Band eine kontinuierliche Bewegung in Längsrichtung und das vom Band umschlungene rotierende Kopfrad eine langsame Hubbewegung quer zur Längsrichtung des Bandes ausführt. Dort sind aber keine Maßnahmen getroffen, den durch die Längsbewegung des Bandes hervorgerufenen Versatz nebeneinander liegender Spurabschnitte in Längsrichtung des Trägers auszugleichen. Die Begrenzungslinien der Blöcke liegen daher unter einem Winkel schräg zur Kante des Magnetbandes.

Durch die erfindungsgemäße Lösung mit senkrecht oder annähernd senkrecht zur Trägerkante gerichteten Begrenzungslinien der gebildeten Blöcke ergeben sich folgende Vorteile, die insbesondere bei der Aufzeichnung eines digitalen Bildsignals zum Tragen kommen.

Es wird ein Bildsuchlauf ermöglicht, ohne daß ein teurer Aufwand an Mikromechanik für die Spurführung benötigt wird. Die Aufzeichnung des Tonsignals kann bei optimaler Ausnutzung der Speicherfläche so erfolgen, daß das Tonsignal getrennt von dem Bildsignal aufgezeichnet, wiedergegeben und gelöscht werden kann und somit auch eine Nachvertonung möglich ist. Die Aufnahme und Wiedergabe sind in beiden Laufrichtungen des Aufzeichnungsträgers möglich. Es ergibt sich auch ein einfacher Lademechanismus für den Aufzeichnungsträger.

Bei der erfindungsgemäßen Lösung nehmen die jeweils aus einer Vielzahl von Spurabschnitten bestehenden Blöcke auf dem Träger annähernd rechteckförmige Flächen ein, die durch annähernd parallel und annähernd senkrecht zur Trägerkante stehende Linien begrenzt sind. Diese annähernd rechteckförmige Flächen einnehmenden Blöcke sind somit auf dem Magnetband matrixartig in Längsrichtung aufeinanderfolgend angeordnet. Dabei ist vorzugsweise zwischen aufeinanderfolgenden Blöcken und auch benachbart parallel liegenden Spuren kein Zwischenraum vorgesehen. In Längsrichtung des Trägers hintereinanderliegende Spurabschnitte gehen also ohne Zwischenraum ineinander über oder überlappen einander. Vorzugsweise sind die Spurabschnitte je durch einen Anfangsimpuls und einen Endimpuls markiert. Die quer zur Längsrichtung des Trägers parallel nebeneinander liegenden Spurabschnitte sind indessen aufgrund unterschiedlichen Azimutwinkels voneinander trennbar.

Die Aufzeichnung und Wiedergabe erfolgt vorzugsweise mit einer zylinderförmigen Kopftrommel, über deren Umfang mehrere Köpfe verteilt angeordnet sind. Die Kopftrommel wird von dem Magnetband über einen Winkel von z.B. 180° umschlungen, und zwar derart, daß die Längsrichtung des Magnetbandes annähernd quer zur Achse des Zylinders verläuft, also im Gegensatz zur Schrägspuraufzeichnung nicht gegen diese geneigt ist. Die beiden Kanten des Magnetbandes liegen also immer in einer Ebene. Diese Lösung hat den Vorteil, daß das Magnetband im Gegensatz zur Schrägspuraufzeichnung stets in einer Ebene und parallel zur Wickelachse bleibt und daß auch der Aufwand für die Bandführung und die Anforderung an die Genauigkeit der Bandführung verringert werden.

Die Köpfe können am Umfang einer rotierenden Kopftrommel angeordnet sein. Es ist auch möglich, die Köpfe auf einer rotierenden Kopfradscheibe anzuordnen, die sich zwischen zwei miteinander und mit der Kopfradscheibe koaxialen, fest stehenden Zylindern befindet. Bei dieser Lösung werden die Reibung zwischen dem Kopfrad und dem Magnetband und die träge Masse der drehenden Teile gegenüber dem Fall verringert, daß die gesamte Kopftrommel rotiert.

Damit die Spuren quer zur Bandrichtung nebeneinander geschrieben werden, wird während des Abtastvorganges das Kopfrad in Richtung seiner Achse, also quer zur Längsrichtung des Magnetbandes, kontinuierlich verstellt. Dadurch kommt es zu einer geringen Schräglage der Spurabschnitte relativ zur Bandkante.

Durch die matrixartige Anordnung ist es möglich, bei der Abtastung durch entsprechende Änderung des Bereiches der Höhenverstellung des Kopfrades quer zur Bandrichtung nur bestimmte Bereiche jedes Blockes abzutasten. Einzelne Bereiche eines Blockes, die quer zur Bandrichtung aufeinanderfolgen, können daher unterschiedliche und voneinander unabhängige Signale enthalten, wie z.B. ein Bildsignal, verschiedene Tonsignale und Steuersignale. Dadurch, daß die Spurabschnitte annähernd parallel zur Bandkante liegen, können im Gegensatz zur Schrägspuraufzeichnung verschiedene aufgezeichnete Signale geometrisch separiert und getrennt voneinander wiedergegeben werden. Dies gilt auch für Bandgeschwindigkeiten, die von der Normalgeschwindigkeit abweichen, z.B. für Suchlauf.

Bei einer Ausführungsform der Erfindung wird in der beschriebenen Weise das Magnetband nur über die halbe Breite beschrieben und entsprechend abgetastet. Durch diese Lösung wird eine sogenannten Wendekassette ermöglicht, bei der bei einem Abtastvorgang jeweils nur die halbe Breite des Magnetbandes und nach Umkehr der Kassette die andere halbe Breite beschrieben oder abgetastet wird. Das Magnetband kann jedoch auch unter Benutzung beider Halbspuren des Bandes mit z.B. zwei parallel arbeitenden Abtastsystemen quasikompatibel mit Signalen höherer Datenrate, wie z.B.

einem hochaufgelösten Fernsehsignal (HDTV) beschrieben werden.

Bei der Aufzeichnung eines Fernsehsignals enthält ein Spurabschnitt ungefähr 1/50 Vollbild, also ungefähr 16 Bilder pro Block. Die Zahl der auf der Kopftrommel angeordneten Köpfe ist vorzugsweise eine gerade Zahl, beispielsweise 4. Auch die Zahl der Spurabschnitte pro Block ist vorzugsweise eine gerade Zahl und liegt in der Größenordnung von einigen 100 bis 1.000. Zur Verringerung des Übersprechens zwischen benachbarten Spurabschnitten erfolgt vorzugsweise die Aufzeichnung in benachbarten Spurabschnitten mit unterschiedlich geneigten Azimutwinkeln, z.B. +6° und -6°. Dabei haben in Längsrichtung des Bandes hintereinanderliegende Spurabschnitte gleichen Azimutwinkel.

Gemäß einer Weiterbildung der Erfindung kann zusätzlich eine Einrichtung zur automatischen Spurnachführung, ein sogenanntes DTF (Dynamic Track Following) vorgesehen sein, mit dem der Kopf insbesondere am Ende eines Spurabschnittes immer genau auf den Spurabschnitt eingestellt wird.

Vorzugsweise werden die einzelnen Blöcke mit einer Adressierung versehen, also einer durchlaufenden Numerierung, so daß ein bestimmter Block im Suchlauf angefahren und ggf. gelöscht, korrigiert oder durch einen anderen Signalinhalt ersetzt werden kann. Die Erfindung wird im folgenden anhand der Zeichnung erläutert. Darin zeigen

Fig. 1 die Anordnung der Spurabschnitte auf der halben Breite eines Magnetbandes,

Fig. 2 eine vergrößerte Darstellung der Spurabschnitte gemäß Fig. 1,

Fig. 3 die Zuordnung des Magnetbandes zu einer die Köpfe tragenden Kopftrommel,

Fig. 4 den zeitlichen Ablauf der Aufzeichnung an einem Beispiel mit 4 Köpfen und 4 Spurabschnitten je Block für den Fall, daß der Bandvorschub und die Drehrichtung des Kopfes gleichsinnig sind,

Fig. 5 den zeitlichen Ablauf nach Fig. 4 für den Fall, daß die Richtung des Bandvorschubes und die Richtung der Kopfbewegung gegensinnig gerichtet sind,

Fig. 6 eine nähere Erläuterung der in Fig. 4,5 auftretenden Winkel für den praktischen Fall mit einer Vielzahl von Spurabschnitten je Block,

Fig. 7 eine konstruktive Ausbildung des Kopfrades,

Fig. 8 einen Schnitt durch Fig. 7,

Fig. 9 eine weitere Ausbildung des Kopfrades,

Fig. 10 einen Schnitt durch Fig. 9,

Fig. 11 das Zusammenwirken zwischen einer das Magnetband enthaltenden Kassette und der Kopftrommel gemäß den Fig. 9,10,

Fig. 12 eine Anordnung von Spuren auf dem Magnetband mit Kennsignalen für eine selbsttätige Spurfindung und

Fig. 13 die Anordnung der Kennsignale jeweils in Zeitfenstern an den Anfängen bzw. Enden von Spuren.

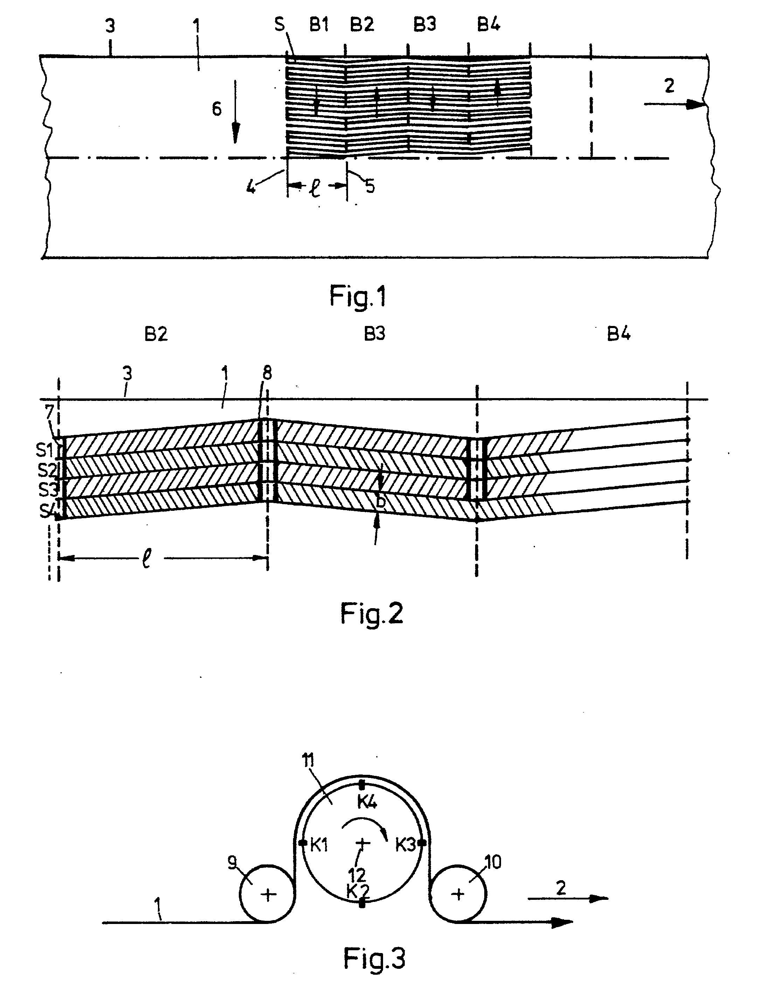

Fig. 1 zeigt ein Magnetband 1, das bei der Aufnahme und bei der Wiedergabe in seiner Längsrichtung 2 mit konstanter Geschwindigkeit transportiert wird, z.B. in der Größenordnung von 10 - 30 mm/s. Die auf dem Magnetband 1 geschriebenen Spurabschnitte S mit der Breite b und der Länge 1 verlaufen unter einem geringen Winkel φ≈ arctan b/1, z.B. arctan 10 μm/15 mm geneigt im wesentlichen parallel zur Bandkante 3. Zeitlich aufeinanderfolgende Spurabschnitte S liegen außer beim Übergang von einem Block zum anderen in Querrichtung des Bandes 1 nebeneinander und bilden somit einen Block B1 von Spurabschnitten. Die Begrenzungslinien 4,5 des Blockes B1, d.h. die Linie der Anfangspunkte und Endpunkte der Spurabschnitte S, liegen senkrecht zur Bandkante 3. Der Block B1 erstreckt sich nur über die halbe Breite des Bandes 1. Das hat den Zweck, daß auf der anderen Hälfte ein anderes, unabhängiges Signal aufgezeichnet werden kann (Wendekassette). Die geringe Schräglage der Spurabschnitte S zur Bandkante 3 ist dadurch bedingt, daß der die Spurabschnitte S abtastende Kopf während der Abtastung in Längsrichtung 2 gleichzeitig eine kontinuierliche Bewegung in Querrichtung 6 ausführt, damit bei Übergang von einem auf einen anderen Kopf dieser jeweils den nächsten parallel darunter liegenden Spurabschnitt S mit dem nötigen Versatz schreiben kann. Auf diese Weise werden nacheinander die Blöcke B1, B2, B3, B4 usw. geschrieben, die je eine in Bandrichtung senkrecht zur Bandkante 3 begrenzte annähernd rechteckförmige Fläche auf dem Band 1 einnehmen. Wenn der letzte Spurabschnitt S an der unteren Kante des Blockes B1 geschrieben wurde, beginnt der nächste aktive Kopf mit dem entsprechenden Schreiben des nächsten Blockes B2, jedoch jetzt ausgehend von der Mitte des Magnetbandes 1 bis zur Bandkante 3 hin, wie durch die Pfeile dargestellt. Da sich jetzt der Kopf von der Mitte des Bandes 1 zur Bandkante 3, also nach oben, bewegt, ist auch die Schrägstellung der Spurabschnitte im Block B2 gegenüber der im Block B1 entgegengesetzt gerichtet.

Fig. 2 zeigt in vergrößerter Darstellung vier aufeinanderfolgende Spurabschnitte S1 - S4 für den Block B2. Die Spurabschnitte S sind jeweils mit einem Anfangsimpuls 7 und einem Endimpuls 8 gekennzeichnet, damit bei der Wiedergabe die Spurabschnitte S wieder erkannt werden können.

In Fig. 3 ist das Band 1 mit Umlenkrollen 9, 10 um eine zylinderförmige Kopftrommel 11 über einen Winkel von etwa 180° herumgeführt. Das Band verläuft dabei senkrecht zur Achse 12 der Kopftrommel 11, ist also nicht wie bei der sogenannten Schrägspuraufzeichnung unter einem Winkel dazu geneigt. Das Band 1 erleidet also keine Verdrehung aus der Ebene der Wickelachsen. Das Kopfrad 11 trägt Köpfe K1, K2, K3, K4, die nacheinander die Spurabschnitte S1, S2, S3, S4 auf dem Band 1 schreiben oder lesen. Dabei bewegt sich die Kopftrommel 11 in Richtung der Achse 12, und zwar für die aufeinanderfolgenden Blöcke B1, B2, B3, B4 in abwechselnder Richtung, wie in Fig.1 durch die Pfeile dargestellt.

Wenn ein Kopf K einen Spurabschnitt S schreibt, bewegt sich während dieser Zeit das Band 1 in Längsrichtung 2 um einen bestimmten Betrag. Wenn jetzt der nächste Kopf den darauffolgenden Spurabschnitt S, z.B. S2, unter gleichen Voraussetzungen schreibt, wäre der zweite Spurabschnitt gegenüber dem davorliegenden entgegen der Richtung 2 um diesen Betrag versetzt. Die einzelnen Blöcke B gemäß Fig. 1,2 würden also nicht senkrecht zur Bandkante 3, sondern schräg zur Bandkante 3 liegen. Dann könnte das Band nicht voll ausgenutzt werden, oder es käme zu einer Überlappung von einzelnen Blöcken B.

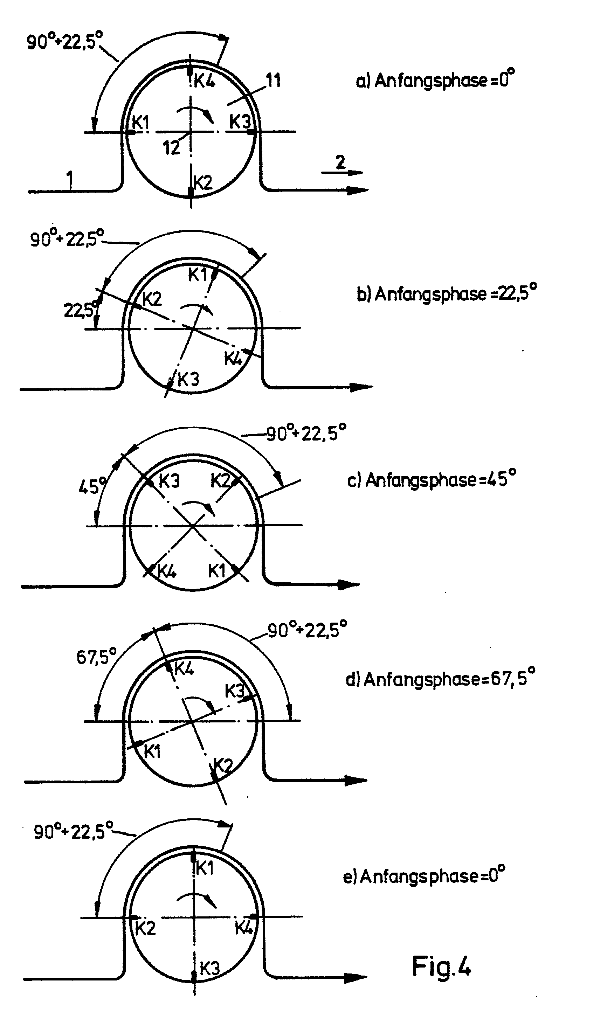

Fig. 4 zeigt eine Steuerung der Köpfe an einem vereinfachten Beispiel von 4 Köpfen und 4 aufeinanderfolgenden Spurabschnitten S je Block, bei der die Lage der Spurabschnitte gemäß Fig. 1, 2 erreicht wird.

In Fig. 4a ist angenommen, daß der Kopf K1 mit der Anfangsphase 0° der Trommel durch Rotation der Kopftrommel 11 in der dargestellten Richtung über einen Winkel von 112,5° den Spurabschnitt S1 auf dem Band 1 schreibt und sich dabei gleichzeitig kontinuierlich in Richtung der Achse 12 bewegt. Während dieser Zeit ist jedoch die Lage des Bandes 1 zur Kopftrommel 11 nicht unverändert geblieben. Vielmehr hat sich das Band 11 in Richtung 2 um den Längsvorschub des Bandes bewegt. Die Länge des geschriebenen Spurabschnittes auf Band entspricht damit einem Viertel des Kopftrommelumfanges. Der Anfang des geschriebenen Spurabschnittes S1 befindet sich also am Ende des Schreibvorgangs nicht mehr an der in Fig. 4a mit K1 bezeichneten Stelle, sondern um 22,5° in Richtung 2 versetzt. Deshalb wird der Schreibvorgang mit dem Kopf K2 für den folgenden Spurabschnitt S2 mit einer Anfangsphase von 22,5° gestartet. Dadurch wird erreicht, daß der Spurabschnitt S2 ohne Versatz unmittelbar neben dem Spurabschnitt S1 liegt, wie in Fig. 2 dargestellt.

Da sich nach dem Schreiben des Spurabschnittes S2 das Magnetband 1 wiederum um den gleichen Betrag in Längsrichtung 2 bewegt hat, liegt jetzt der Anfang der gechriebenen Spur S2 an der in Fig. 4c mit K3 angedeuteten Stelle. Deshalb beginnt entsprechend der Schreibvorgang mit dem Kopf K3 für den Spurabschnitt S3 mit einer Anfangsphase von 45°, damit wiederum der Spurabschnitt S3 unmittelbar neben dem Spurabschnitt S2 ohne Versatz liegt gemäß Fig 2. Dementsprechend beginnt der Schreibvorgang mit dem Kopf K4 für den Spurabschnitt S4 gemäß Fig. 4d mit einer Anfangsphase von 67,5°, so daß auch der Spurabschnitt S4 unmittelbar neben den übrigen Spurabschnitten S1 - S3 ohne Versatz liegt. Fig. 4e zeigt die Ausgangsstellung für das Schreiben der ersten Spur des nächsten Blockes B3 mit dem Kopf K2.

Der die Bandgeschwindigkeit innerhalb eines Blockes kompensierende Versatz der Spuranfangs und -endpunkte gegen den fest vorgegebenen Ein- und Auslauf jedes Kopfes in den vom Band umschlungenen Winkelbereich wird durch geeignete elektronische Schalter realisiert, d.h.:
- Beim Aufnahmevorgang wird das Kopfsignal nur für den jeweiligen Winkelbereich beaufschlagt.
- Beim Lesevorgang wird aus dem gelesenen Signal der jeweilige Zeitabschnitt ausgeblendet.

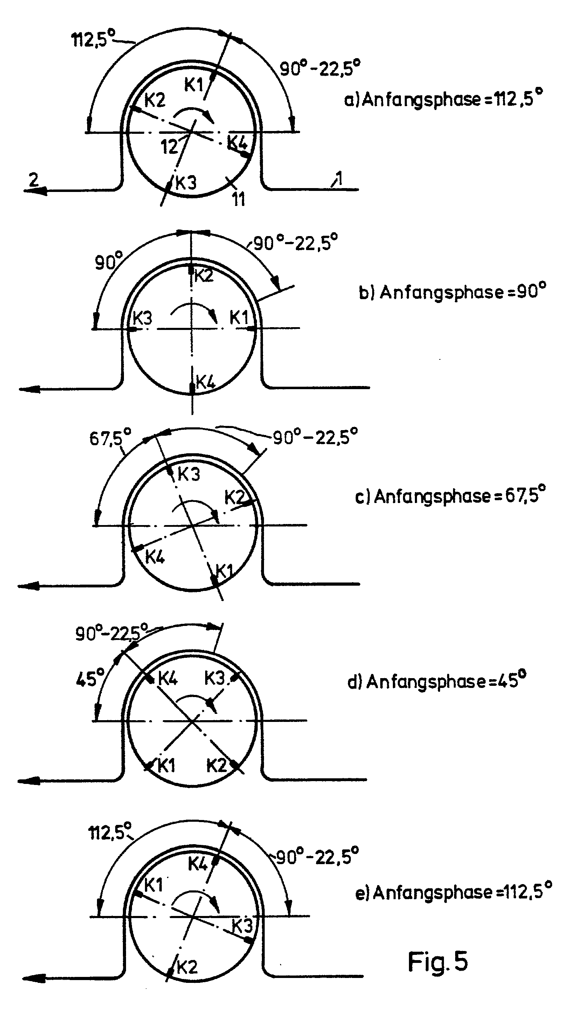

Fig. 5 zeigt die Abtastung des Magnetbandes 1 gemäß Fig. 4, jedoch für den Fall, daß die Transportrichtung 2 des Magnetbandes 1 der Drehrichtung der Kopftrommel 11 entgegengesetzt gerichtet ist. Da jetzt das Magnetband 1 am Umfang der Kopftrommel 11 den Köpfen K entgegenläuft, wird die geometrische Länge des geschriebenen Spurabschnittes vergrößert. Da die Länge eines Spurabschnittes wieder dem Umfang über 90° der Kopftrommel 11 entsprechen soll, wird jetzt der Winkel, während dessen ein Kopf K den Schreibvorgang oder Lesevorgang durchführt, um 22,5° verringert. In Fig. 5a beginnt die Abtastung mit dem Kopf K1 bei 112,5° und endet bei 180°, beträgt also 90° - 22,5°. Da sich das Magnetband 1 während dieser Abtastung nach links, also im Gegenuhrzeigersinn zur Kopftrommel 11 bewegt hat, befindet sich der geschriebene Spurabschnitt gemäß Fig. 5b bei 90°, so daß gemäß Fig. 5b anschließend der nächste Spurabschnitt beginnend bei 90° wieder über einen Winkel von 90° - 22,5° geschrieben wird. Gemäß Fig. 5c und d verschiebt sich jetzt der Beginn des Abtastvorganges eines Kopfes K von Spurabschnitt zu Spurabschnitt um 22,5° entgegen der Drehrichtung der Kopftrommel 11.

In Fig. 5e beginnt die Abtastung eines Spurabschnittes des nächsten Blockes, wiederum bei einer Anfangsphase von 112,5°. Es ist ersichtlich, daß diese Abtastung nun mit dem Kopf K4 erfolgt. Entsprechend müssen die Köpfe mit den Signalen gespeist werden.

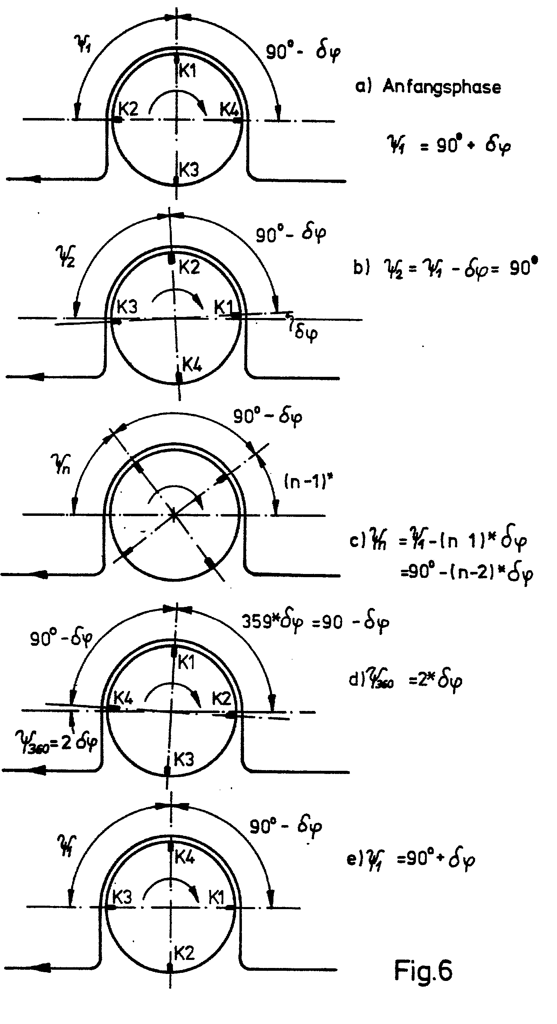

Fig. 6 zeigt verschiedene Phasen der Aufzeichnung von Spurabschnitten innerhalb eines Blockes für den verallgemeinerten Fall vieler Spuren je Block. In einem für die Praxis sinnvollen Anwendungsfall wird hier von einem Magneteband der Breite 8 mm, einer Spurbreite b = 10 μm und einem Kopfrad mit vier Magnetköpfen ausgegangen. Anstelle der theoretisch zu berechnenden Anzahl von 400 Spurabschnitten je Block wird unter Berücksichtigung von unvermeidbarem Mitten- und Randrasen auf dem Magnetband von nur 360 Spurabschnitten je Block ausgegangen. Damit berechnet sich die dynamische Verkürzung bzw. Verlängerung des zum Schreiben bzw. Lesen erforderlichen Drehwinkels des Kopfes, die in den Fig. 4 und 5 vereinfachend zu 22,5° angenommen war, zu

$$\delta\varphi = 90°/360° = 0,25°$$

Fig. 6a zeigt nun das Schreiben des ersten von 360 Spurabschnitten je Block mit dem Magnetkopf K1 bei gegenläufiger Bewegung von Kopf und Band. Der Kopf K1 beginnt den Schreibvorgang mit einer Anfangsphase

$$\psi 1 = 90° + \Delta\varphi = 90,25°$$

und schreibt über einen Drehwinkel von 90° - Δφ. Der nächste Magnetkopf K2 übernimmt den Schreibvorgang (vgl. Fig. 6b) bei einer Anfangsphase

$$\psi 2 = \psi 1 - \delta\varphi = 90°$$

und schreibt seinerseits wiederum über einen Drehwinkel von 90° - δφ.

Fig. 6c zeigt den allgemeinen Fall des Schreibens des Spurabschnittes Nr. n (zwischen 1 und 360). Die Anfangsphase ergibt sich rechnerisch zu

$$\psi n = \psi 1 - (n-1) . \delta\varphi,$$

während der für den Schreibvorgang genutzte Drehwinkel konstant 90° - δφ bleibt.

Fig. 6d zeigt die Winkelverhältnisse beim Schreiben der letzten Spur des betrachteten Blockes mit dem Kopf K4. Die Anfangsphase hat sich verringert auf

$$\psi 360 = 2 . \delta\varphi.$$

Beim Übergang auf den ersten Spurabschnitt des nächsten Blockes (vgl. Fig. 6d) bleibt der Kopf K4 eingeschaltet und schreibt - praktisch kontinuierlich - ab der Anfangsphase

$$\psi 1 = 90° + \delta\varphi.$$

Durch diesen Sprung der Anfangsphase um den zum Schreiben jeder Spur genutzten Phasenwinkel 90° - δφ wird die in Bandlängsrichtung beabsichtigte lückenlose Abfolge von Blocks mit Begrenzungslinien senkrecht zur Bandkante erreicht.

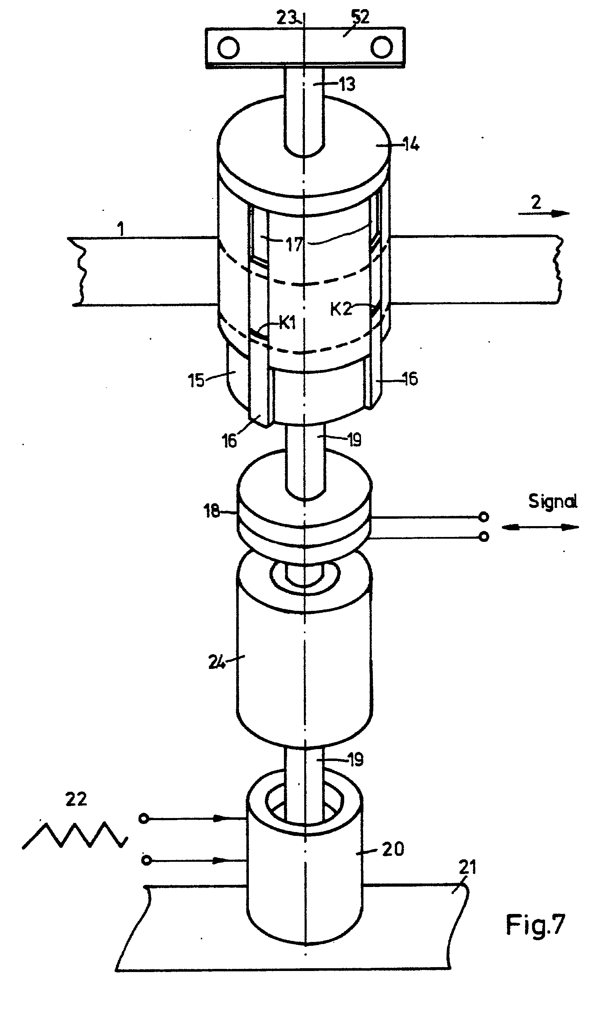

Fig. 7 zeigt eine praktische Ausführung der in den Fig. 3 und 4 dargestellten Kopftrommel 11. In den Lager 52 ist drehbar, aber axial unverschiebbar die Welle 13 gelagert, auf der der Zylinder 14 befestigt ist. Der Zylinder 14 wird wie in Fig. 3 von dem Magnetband 1 über einen Winkel von etwa 180° umschlungen. In dem Zylinder 14 ist relativ zu diesem axial verschiebbar, aber unverdrehbar das Kopfträgerteil 15 gelagert. Dieses enthält vier über den Umfang verteilte, stegartige Teile 16, die in axial verlaufenden Nuten 17 des Zylinders 14 gleiten. Die Teile 16 verschließen die Nuten 17 bis auf einen geringen Zwischenraum von ca. 1/10 mm praktisch vollständig. Ihre Oberfläche ist der Oberfläche des Zylinders 14 weitestgehend angepaßt, so daß die Oberfläche des Zylinders 14 durch die Nuten 17 im Bereich der Lage des Magnetbandes 1 praktisch nicht unterbrochen ist. Die Teile 16 tragen die Magnetköpfe K1 - K4, die somit mit dem Magnetband 1 in Berührung kommen und die beschriebene Aufzeichnung vornehmen können. Das Kopfträgerteil 15 und der Motor 14 werden gemeinsam von dem Motor 24 über den Übertrager 18 und die Welle 19 angetrieben, so daß die Abtastung des Magnetbandes 1 mit den vier Magnetköpfen K1 - K4 gemäß Fig. 4 erfolgt. Der Übertrager 18 dient zur Zuführung der Signale zu den Köpfen K1 - K4 und zur Abnahme der Signale bei der Wiedergabe. Das obere Teil des Übertragers 18 rotiert also zusammen mit der Welle 19, dem Kopfträgerteil 15, dem Zylinder 14 und der Welle 13, während das untere Teil feststeht und zur Zuführung und Abnahme der Signale für die Köpfe oder von den Köpfen dient. Am unteren Ende des Motors 24 ist eine nicht rotierende Welle 19 angeordnet, die in eine als Aktuator dienenden Tauchkernspule 20 eintaucht, die ihrerseits ortsfest an dem Chassis 21 befestigt ist. An die Tauchkernspule 20 ist eine dreieckförmige Spannung 22 angelegt. Diese Spannung 22 bewirkt über die Tauchkernspule 20, die Welle 19, den Motor 24, den Übertrager 18, die Welle 19, das Kopfträgerteil 15 und die Teile 16 die periodische Axialverschiebung der Köpfe K1 - K4 innerhalb der Nuten 17, die in Fig. 1 durch die abwechselnd nach oben und unten gerichteten Pfeile angedeutet ist.

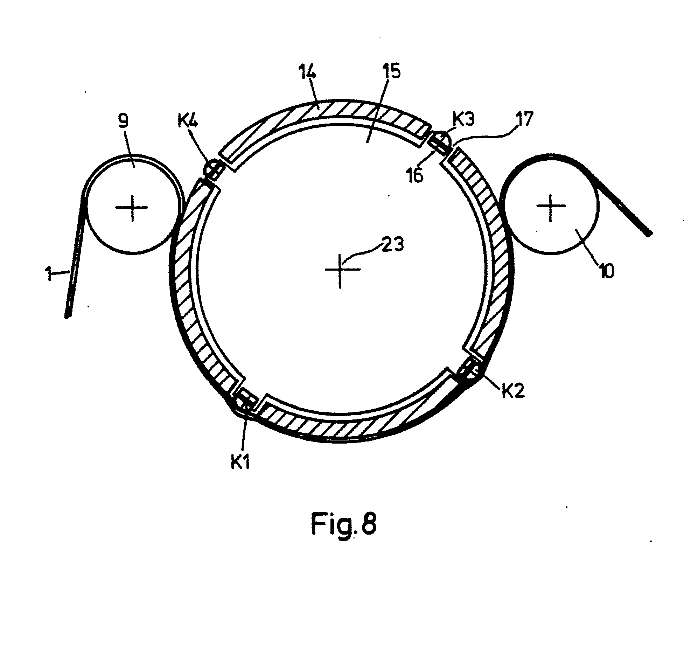

Fig. 8 zeigt einen Schnitt durch die Anordnung nach Fig. 7, und zwar in einer Ebene senkrecht zur Achse und etwa in der Mitte des Magnetbandes 1. Die vier Köpfe K1 - K4 sind wie in Fig. 3 gleichmäßig über den Umfang verteilt angeordnet. Die stegförmigen Teile 16 bilden zusammen mit den Köpfen K1 bis K4 einen weitestgehend dichten Abschluß der Nuten 17, damit das Magnetband 1 im Bereich der Köpfe K1 - K4 keine nennenswerte Verformung erfährt. Die Spalte der Köpfe K1 - K4 ragen etwas über die Oberflächenlinie des Zylinders 14 hinaus, damit ein sicherer Kontakt zwischen den Köpfen und dem Magnetband 1 sichergestellt ist. Der rotierende Zylinder 14 ist in Richtung der Achse 23 unverschiebbar, während das Kopfträgerteil 15 zusammen mit den Köpfen K1 - K4 relativ zum Zylinder 14 in Richtung der Achse 23 gemäß Fig. 7 kontinuierlich und periodisch verstellt wird.

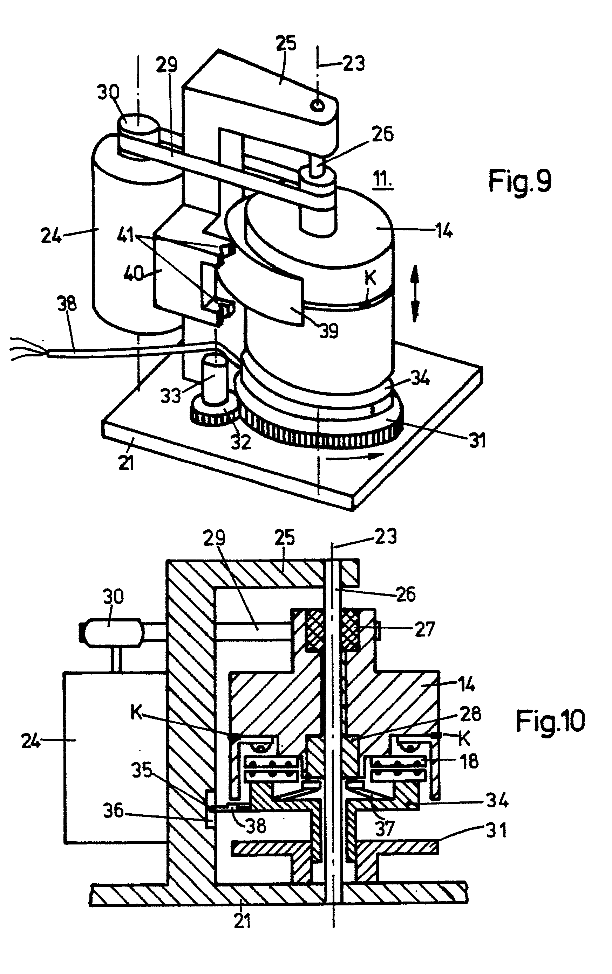

Die Fig. 9 und 10 zeigen eine weitere Ausbildung der Kopftrommel 11. Zwischen dem am Chassis 21 befestigten Ausleger 25 und dem Chassis 21 ist auf der feststehenden Welle 26 der die Köpfe K tragende Zylinder 14 mittels Radiallager 27, 28 drehbar gelagert. Der Zylinder 14 wird von dem Motor 24 über den Treibriemen 29 angetrieben. Durch eine ballige Ausführung der Riemenscheibe 30 wird die noch näher beschriebene Axialbewegung des Zylinders 14 ausgeglichen. Aus dem Gestell 21 ist ein Zahnrad 31 mit einer Außenverzahnung und einem Innengewinde drehbar gelagert, in das das Ritzel 32 des Motors 33 eingreift. Der Motor 33 bewirkt die Höhenverstellung des Zylinders 14 in Richtung der Achse 23 auf folgende Weise. Der Motor 33 dreht das Zahnrad 31. Das Teil 34 ist mit einem Stift 35 und einer Nut 36 in Richtung der Achse 23 verstellbar, aber unverdrehbar in dem Zahnrad 31 gelagert. Bei Drehung des Zahnrades 31 verschiebt sich durch das Gewinde zwischen Zahnrad 31 und Teil 34 das Teil 34 in Richtung der Achse 23 und wirkt über einen piezo-elektrischen Wandler 37 auf den Zylinder 14 ein, so daß dieser in Richtung der Achse 23 verstellt wird. Der piezo-elektrische Wandler 37 bewirkt eine Feinverstellung des Zylinders 14 in Richtung der Achse 23 zur automatischen Spurnachführung. Die Zuführung und Entnahme des Signales zu und von den Köpfen K erfolgt mit dem rotierenden Übertrager, dessen unterer, fester Teil mit dem Teil 34 und dessen oberer, rotierender Teil mit dem Zylinder 14 verbunden ist. Das Kabel 38 führt zu dem Übertrager 18, dem Motor 33 sowie dem Phasendetektor 38, der zur Feststellung der jeweiligen Winkellage des Zylinders 14 dient.

Im Bereich der Umschlingung des Zylinders 14 durch das nichtdargestellte Magnetband ist die Bandführung 39 vorgesehen, die den Zylinder 14 über einen Winkel von etwas weniger als 180° umgibt. Die Bandführung 39 hat an der Oberseite und Unterseite abgewinkelte Ränder, die eine Höhenführung des Bandes bewirken. An beiden Enden der Bandführung 39 sind Aufnahmen 40 mit trapezförmigen Einschnitten vorgesehen, die zur Aufnahme der Stifte dienen, die das Magnetband aus einer Kassette herausführen. Das Magnetband umschlingt somit den Zylinder 14 zwischen den beiden Aufnahmen 40, von denen nur die vordere in Fig. 9 dargestellt ist. Eine entsprechende Aufnahme 40 mit trapezförmigen Kerben 41 ist auf der anderen Seite, also hinter dem Zylinder 14 vorgesehen.

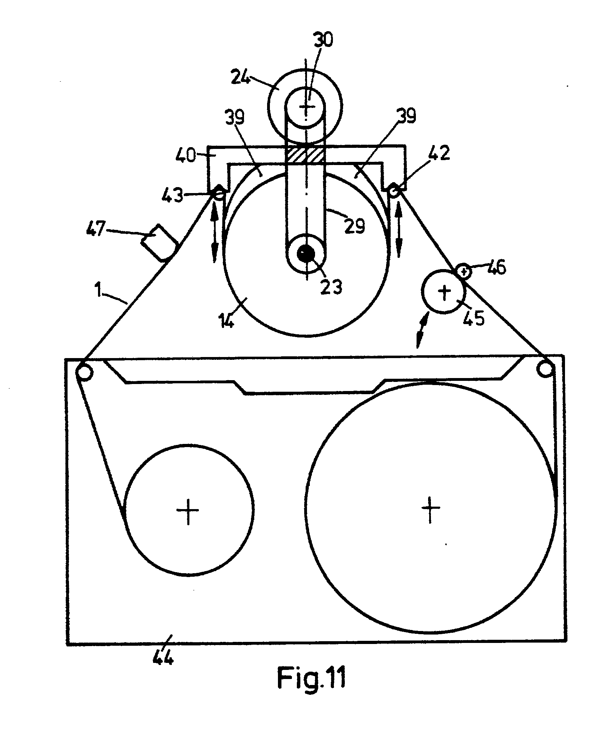

Fig. 11 zeigt, wie das Magnetband 1 aus der Kassette 44 heraus an den Zylinder 14 angelegt ist. Das zunächst in der Kassette 44 befindliche Magnetband 1 wird durch zwei Stifte 42, 43 aus der Kassette 44 in Richtung der dargestellten Pfeile herausgezogen und an den Zylinder 14 angelegt. Die Stifte 42, 43 legen sich dabei in die trapezförmigen Kerben 41 der Aufnahme 40 ein. Gleichzeitig oder anschließend wird die Gummiandruckrolle 45 in Richtung des dargestellten Pfeiles herausgeschwenkt und drückt das Magnetband 1 gegen den Capstan 46. Außerdem legt sich das Magnetband 1 an einen Löschkopf 47 an. Das Magnetband 1 liegt also über einen Winkel von etwa 180° an dem die Köpfe K tragenden Zylinder 14 an. Unmittelbar an die Austrittsstelle und Eintrittsstelle an dem Zylinder 14 folgen die Bandführungen 39, die eine genaue Höhenführung, also Führung des Bandes in Richtung der Achse 23 bewirken.

Die Lösung gemäß Fig. 9,10 hat den Vorteil, daß der Antriebsmotor 24 für die Kopftrommel nicht der Axialbewegung der Kopftrommel, also der Verstellung des Zylinders 14 in Richtung der Achse 23 unterworfen ist. Der Antriebsmotor 33 für die Axialbewegung mit dem Ritzel 32 ist in Fig. 10 nicht dargestellt. Das Magnetband 1 erfährt auf seinem Weg, wie auch Fig. 11 zeigt, keine Torsion, da die beiden Kanten des Magnetbandes 1 jeweils in einer Ebene verbleiben. Die Ebene des Magnetbandes 1 verbleibt also auf seinem ganzen Weg parallel zur den Achsen der beiden Wickelteller in der Kassette 44.

Bei den beschriebenen Ausführungsbeispielen ist jeweils ein Kopf K über einen bestimmten Drehwinkel der Kopftrommel 11 nicht mit dem Magnetband 1 in Berührung. Als Kriterium für den Kopf/Band-Kontakt wird die Winkellage des Kopfrades ausgewertet, indem an dem Kopfrad entsprechende Impulsgeber angeordnet sind. Gemäß einer Weiterbildung der Erfindung wird der Kopf/Band-Kontakt direkt ermittelt. Hierzu ist zu dem Magnetkopf in Spurrichtung versetzt unmittelbar dahinter ein zweiter Magnetkopf zugeordnet. Der erste Kopf wird einem Signal, z.B. einem Pilotträger, gespeist. Der zweite Kopf wird auf Lesen geschaltet, und in einer Auswertschaltung wird festgestellt, ob das dem ersten Kopf zugeführte Signal am Ausgang des zweiten Kopfes erscheint. Ist dies nicht der Fall, ist noch kein Kopf/Band-Kontakt vorhanden. Wenn das dem ersten Kopf zugeführte Signal am Ausgang des zweiten Kopfes ermittelt wird, ist mit Sicherheit der Kopf/Band-Kontakt vorhanden, da sonst der zweite Kopf dieses Signal nicht lesen könnte. Vorzugsweise wird zur Sicherheit mehrmals, d.h. während mehrerer Umdrehungen der Koptrommel 11 das Vorhandensein des Signals festgestellt und dann auf die jeweilige Funktion Schreiben oder Lesen umgeschaltet. Auf diese Weise kann unabhängig von einer Auswertung des Drehwinkels des Kopfrades festgestellt werden, ob der Kopf bereits in Kontakt mit dem Band ist und somit der Schreibvorgang oder Lesevorgang eingeleitet werden kann. Dadurch kann ggf. eine bessere Ausnutzung des Magnetbandes erreicht werden.

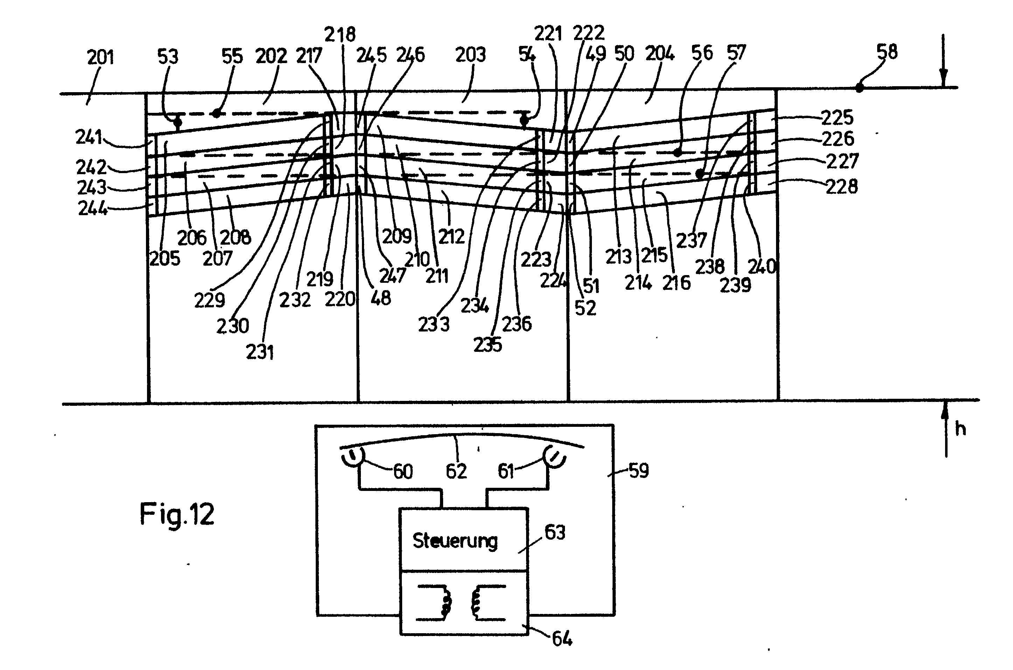

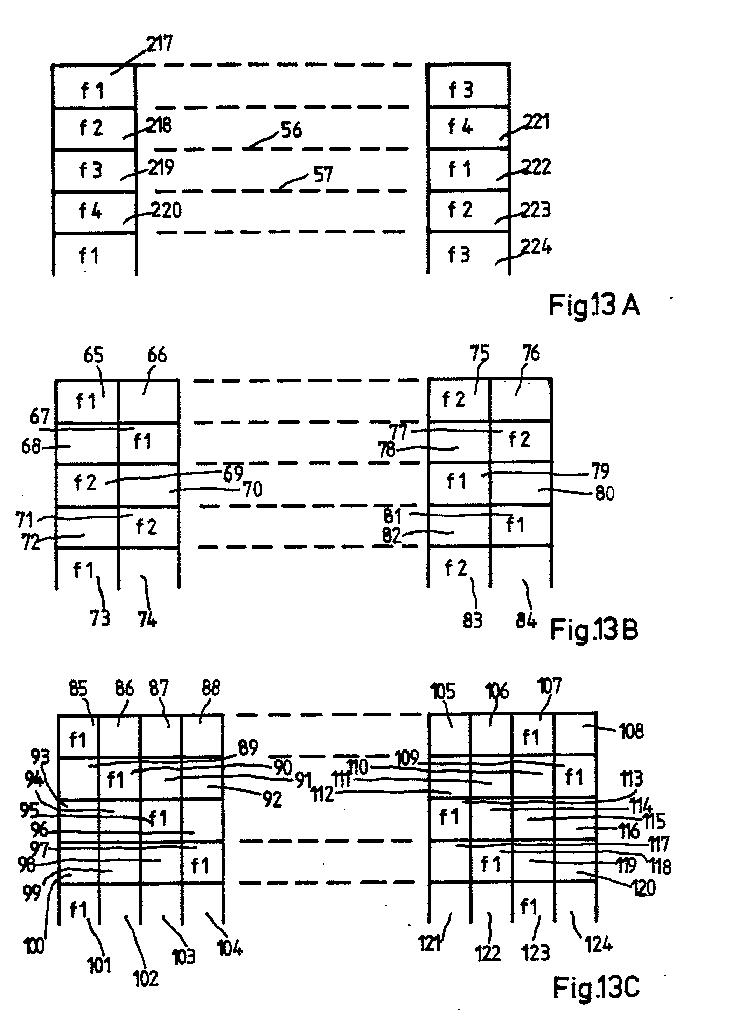

Anhand der Fig. 12, 13 wird eine Weiterbildung des Verfahrens beschrieben, die zur Bestimmung, zum Auffinden und/oder zum Aufzeichnen für Spuren dient, d.h. eine selbsttätige korrekte Spurführung oder Spurfindung ermöglicht.

Fig. 12 zeigt ein Magnetband 201 mit Blöcken 202 - 204, in denen Spuren 205 - 216 angeordnet sind. Die Spuren 205 - 208 sind untereinander, die Spuren 205, 209, 213 nebeneinander angeordnet. Die Höhenlinien 55-57 verlaufen parallel zur Bandkante 58. Die Spuren 2055 - 216 sind in Spurteile 217 - 252 unterteilt. Während ein Magnetkopf 60, 61 den Spurteil 241 - 252, im folgenden Spuranfang 241 - 252 (engl.: Run in) genannt, durchläuft, wird die Kopfradscheibe 59 justiert. Im Nachspann 217 - 228 einer Spur 205 - 216, im folgenden Spurende (engl.: Run out) genannt, muß ein Magnetkopf 60,61 die genaue Lage einer Spur 205 - 216 erkennen. Vor den Spurenden 217 - 228 sind Synchronisierbereiche 229 - 240 angeordnet. Die Nachricht und/oder die Information einer Spur 205 - 216, im folgenden Nutzsignal genannt, liegt zwischen dem Spuranfang 241 und dem Synchronisierbereich 229, dem Spuranfang 242 und dem Synchronisierbereich 230, dem Spuranfang 243 und dem Synchronisierbereich 231 usw. Das Blockschaltbild 59 zeigt einen Teil einer Kopfradscheibe mit Magnetköpfen 60,61. Über eine Steuerung 63 und einem oder mehreren Übertragern 64 werden aufgezeichnete und/oder aufzuzeichnende Signale von der Kopfradscheibe an und/oder von den Schaltungsaufbau im Chassis eines Videorekorders übergeben und/oder übernommen. Das Blockschaltbild 59 zeigt den Kopfradscheibenrand 62 im abgewickelten Zustand. Nur eine leichte Krümmung des Kopfradscheibenrandes 62 weist darauf hin, daß die Kopfradscheibe rund ist. In der Praxis sind vier Magnetköpfe 60,61 auf einer Kopfradscheibe in einem Abstand von 90° untergebracht. Bei der Aufzeichnung von Signalen im Block 203 liest der Magnetkopf 60 das Spurende 219 der Spur 207 im Block 202. Gleichzeitig schreibt der Magnetkopf 61 das Spurende 222 der Spur 210 im folgenden Block 203. Die Blöcke 202 und 204 werden Spur für Spur von unten nach oben beschrieben, der Block 203 wird Spur für Spur von oben nach unten beschrieben. Im Bereich 247 wird aufgrund der Information aus dem Spurende 219, die der Kopf 60 gelesen hat, die Kopfradscheibe neu justiert, bevor der Kopf 60 ein Nutzsignal auf der Spur 211 aufzuzeichnen beginnt. Die gestrichelt gezeichneten Höhenlinien 56 und 57 zeigen an, daß das Spurende 219 zum Spuranfang 247 etwa parallel liegt und daß das Spurende 219 und der Spuranfang 247 etwa den gleichen Abstand zur Bandkante 58 einnehmen. Die Spuren 205 - 208, 213 - 216 der Blöcke 202 und 204 schneiden die Höhenlinie 55 mit einem Winkel 53 und die Spuren 209 - 212 des Blockes 203 in einem Winkel 54. Die Winkel 53 und 54 sind betragsmäßig etwa gleich groß, aber nehmen verschiedene Vorzeichen zu der Höhenlinie 55 ein. Diese Abweichungen sind in der Praxis so gering, daß sie zur Spurfindung vernachlässigbar sind. Während der Kopf 60 das Spurende 219 liest, wird anhand von einem Übersprechen der benachbarten Spurenden 218 und 220 eine eventuell notwendige Höhenkorrektur der Kopfradscheibe vorgenommen. Nach Aufzeichnung der Spur 210 im Block 203 wird die Spur 211 im Block 203 aufgezeichnet. Die Aufzeichnung erfolgt so, daß in dem Block 203 die Spuren 209 - 212 zunächst untereinander aufgezeichnet werden, bevor zu dem folgenden Block 204 übergegangen wird. Bei Aufzeichnung der Spur 211 wird das Spurende 219 der Spur 207 abgetastet. Übersprechen der Spurenden 218 und 220 zu den Spuren 206 und 208 werden ausgewertet und justieren die Kopfradscheibe in der richtigen Höhe.

Vorteilhaft kann das gleichzeitige Lesen und Schreiben zweier Magnetköpfe beim Überschreiben eines Blockes 203 benutzt werden. Auch wenn der Block 203 Störungen aufweist, kann der Block 203 vollständig ersetzt werden. Beim Justieren des Kopfes 60 in einer richtigen Höhe h auf dem Band 201 sind nicht unmittelbar vorhergehende Spuren 209 - 212 des Blockes 203 zur Justierung verwendet, sondern der Block 202 wird zur Justierung herangezogen.

Während des Lesens des Spurendes 219, das maßgebend für eine Justierung der Kopfradscheibe in einer Höhe h zum Band 201 ist, sind gleichzeitig zwei Magnetköpfe 60 und 61 aktiv, einer liest und einer schreibt. Für ein Spurfolgesystem werden daher insgesamt vier verschiedene Frequenzen f1 - f4 benötigt. Fig. 13A zeigt die Spurenden untereinanderliegender Spuren. Jedes Spurende 217 - 228 weist ein ihn charakterisierendes Kennsignal, im folgenden Sinussignal genannt, mit unterschiedlicher Frequenz f1 - f4 auf. Beim Lesen liest ein Magnetkopf 60 im Spurende 218 ein Sinussignal mit der Frequenz f2 und gleichzeitig Übersprechen aus den Spurenden 217 und 219 mit Frequenzanteilen aus den Frequenzen f1 und f3. Aus den Übersprechanteilen wird die genaue Lage der neu aufzuzeichnenden Spur 211 ermittelt. Während der Kopf 60 drei Frequenzen f1-f3 liest, schreibt der Kopf 61 ein neues Spurende 221 mit der Frequenz f4. Da alle Sinussignale gleichzeitig über einen Übertrager 64 von einem Schaltungsaufbau im Chassis an die Kopfradscheibe und/oder von der Kopfradscheibe an einem Schaltungsaufbau im Chassis übergeben werden, werden vier verschiedene Frequenzen verwendet, weil Frequenzen, Übersprechanteile von Frequenzen und Mischfrequenzen sowohl von der Steuerung 63 als auch von dem Schaltungsaufbau im Chassis eindeutig unterschieden werden müssen.

Fig. 13B zeigt die Aufteilung der Kennsignale in den Spurenden 217 - 224 in mehrere Zeitfenster. Dabei enthält das Spurende 217 zwei Zeitfenster 65, 66, das Spurende 218 zwei Zeitfenster 67,68, das Spurende 219 zwei Zeitfenster 69,70, das Spurende 220 zwei Zeitfenster 71,72, die logische Fortsetzung zeigt eine nächste Spur mit zwei Zeitfenstern 73,74. Das Spurende 221 weist zwei Zeitfenster 77, 78 auf, das Spurende 222 zwei Zeitfenster 79,80, das Spurende 223 zwei Zeitfenster 81, 82 und das Spurende 224 zwei Zeitfenster 83, 84, der logische Anfang ist mit zwei Zeitfenstern 75, 76 gekennzeichnet. Bei zwei Zeitfenstern werden zwei verschiedene Sinussignale mit Frequenzen f1 und f2 verwendet. In den Zeitfenstern 66,68,70,72,74,76,78,80,82 und 84 wird kein Signal, das bedeutet Rauschen bei Abtastung, aufgezeichnet. Die Anordnung der Zeitfenster 69,70,79,80 mit Frequenzen f1 und f2 ist so gewählt, daß die Frequenz f1, die der Kopf 61 in das Spurende 222 im Zeitfenster 79 schreibt, von der Frequenz f2, die der Kopf 60 liest, verschieden ist. Während der Kopf 60 im Zeitfenster 70 Übersprechanteile der Frequenzen f1 und f2 aus den benachbarten Spurenden 218 und 220 aus den Zeitfenstern 67 und 71 liest, und Mischfrequenzen im Übertrager 64 aus den Frequenzen f1 und f2 entstehen, schreibt der Kopf 61 kein Sinussignal, also Rauschen, in das Zeitfenster 80. So werden Frequenzen sowohl von der Kopfradsteuerung 63 als auch vom Schaltungsaufbau im Videorekorder unterschieden.

Fig. 13C zeigt die Aufteilung der Kennsignale in den Spurenden 217 - 224 in mehrere Zeitfenster. Das Spurende 217 enthält vier Zeitfenster 85-88, das Spurende 218 vier Zeitfenster 89-92, das Spurende 219 vier Zeitfenster 93-96, das Spurende 220 vier Zeitfenster 97-100, das Spurende einer folgenden Spur vier Zeitfenster 101-104. Das Spurende 221 weist vier Zeitfenster 109-112 auf, das Spurende 222 vier Zeitfenster 113-116, das Spurende 223 vier Zeitfenster 117-120, das Spurende 224 vier Zeitfenster 121-124 und ein Spurende über der Spur 209 würde vier Zeitfenster 105-108 aufweisen. In den Zeitfenstern 86-89, 91-94, 96, 98-100, 102-106, 108, 110-112, 114-117, 119-122, 124 wird kein Signal, also nur Rauschen, aufgezeichnet. Die Anordnung der Zeitfenster 85-124 mit einer Frequenz f1 ist so gewählt, daß die Frequenz f1 von der Steuerung 63 und/oder von einem Schaltungsaufbau im Chassis eines Videorekorders zugeordnet werden kann. Wenn der Kopf 61 die Frequenz f1 während des Zeitfensters 113 schreibt, empfängt der Kopf 60 aus dem Spurende 219 und den benachbarten Spurenden 218 und 220 mit den Zeitfenstern 89,93 und 100 kein Sinussignal. Während der Zeitfenster 114-116 wird über den Übertrager 64 für den Kopf 61 kein Signal übergeben. Während dieser Zeitfenster 114-116 liest der Kopf 60 die Übersprechanteile aus den Spurenden 218 und 220 während der Zeitfenster 90 und 97 und die Frequenz f1 während des Zeitfensters 95. Danach kann die Kopfradscheibe während des Spuranfangs 247 neu justiert werden und der Kopf 60 schreibt danach die neue Spur 211.

Aus den Kennsignalen f1-f2 wird eine Stellgröße gewonnen, die die jeweilige Abweichung des Kopfes 60,61 von einer Spur 205 - 216 anzeigt. Diese Stellgröße verstellt über einen elektromechanischen Wandler, z.B. über eine Piezokeramik, die Lage des Kopfes 60,61 einer Kopfradscheibe und/oder die Kopfradscheibe quer zu einer Spur 205 - 216 derart, daß der Kopf 60,61 die vorhergeschriebene Spur 205 - 216 einhält.

## Patentansprüche

1. Verfahren zur Aufzeichnung eines Signals auf einem bandförmigen Aufzeichnungsträger, insbesondere für ein Digitalsignal auf einem Magnetband (1), bei dem jeweils zeitlich aufeinanderfolgende, gegenüber der Länge des Trägers (1) kurze Spurabschnitte (S) auf dem Träger (1) nebeneinander liegen und die Spurabschnitte (S1-S4) etwa parallel zur Trägerkante verlaufen und in Querrichtung (6) zur Trägerkante (3) derart nebeneinander liegen, daß die Begrenzungslinien (4, 5) der gebildeten Blöcke (B) von Spurabschnitten (S1-S4) senkrecht oder annähernd senkrecht zur Trägerkante (3) gerichtet sind, wobei die das Schreiben und/oder Lesen bewirkenden Abtastelemente am Umfang einer zylinderförmigen, rotierenden Trommel angeordnet sind, die vom Träger umschlungen ist, dadurch gekennzeichnet, daß der Drehwinkel der Köpfe (K), während dessen der Schreibvorgang eines Spurabschnitts (S) erfolgt, von Spurabschnitt zu Spurabschnitt innerhalb eines Blockes um einen solchen Betrag versetzt ist, daß der durch den Längsvorschub des Trägers (1) an sich auftretende Versatz aufeinander folgender Spurabschnitte (S) in ihrer Längsrichtung ausgeglichen wird und diese ohne Versatz in Trägerlängsrichtung auf dem Träger (1) annähernd nebeneinander liegen.

2. Verfahren nach Anspruch 1, dadurch gekennzeichnet, daß die Trommel (11) nur über einem Teil (180°) ihres Umfangs vom Träger (1) umschlungen ist.

3. Verfahren nach Anspruch 1, dadurch gekennzeichnet, daß die Trommel (11) mehrere über den Umfang verteilte Köpfe (K1–K4) enthält.

4. Verfahren nach Anspruch 1, dadurch gekennzeichnet, daß die Trommel (11) bzw. die Kopfscheibe während der Abtastung der Spurabschnitte (S) in Richtung ihrer Achse (12) relativ zum Träger (1) verstellt wird.

5. Verfahren nach Anspruch 4, dadurch gekennzeichnet, daß der Bereich, über den die Verstellung erfolgt, so veränderbar ist, daß nur die Spurabschnitte über einen ausgewählten Teil der Breite des Trägers (1) abgetastet werden.

6. Verfahren nach Anspruch 1, dadurch gekennzeichnet, daß in Richtung des Spurabschnitts (S) hintereinander zwei Abtastelemente vorgesehen sind, von denen das erste für einen Schreibvorgang mit einem Signal gespeist wird und das zweite als Leselement wirkt, und das Vorhandensein des Signals am Ausgang des zweiten Abtastelementes als Kriterium für vorhandenen Kontakt zwischen Abtastelement und Träger dient.

7. Verfahren nach Anspruch 1, dadurch gekennzeichnet, daß die Aufzeichnung von Spurabschnitt zu Spurabschnitt mit unterschiedlichen Azimutwinkeln erfolgt.

8. Verfahren nach Anspruch 1, dadurch gekennzeichnet, daß eine Spurnachregelung vorgesehen ist, die jeweils am Ende eines Spurabschnittes (S) eine genaue Lage des Abtastelementes zum Spurabschnitt sicherstellt.

9. Verfahren nach Anspruch 4, dadurch gekennzeichnet, daß für die axiale Verstellung des Kopfträgerteils (15) ein Hubmagnet (20) vorgesehen ist.

10. Verfahren nach Anspruch 1, dadurch gekennzeichnet, daß für das Schreiben und/oder Lesen eines Spurabschnittes (S) nur etwa der halbe Winkel des Umschlingungswinkels genutzt wird.

11. Verfahren nach Anspruch 1, dadurch gekennzeichnet, daß beim Schreiben von Spurabschnitten (S) der Anfang und das Ende eines Spurabschnitts (S) nicht durch den zeitlichen Anfang und das zeitliche Ende des Kontaktes zwischen Träger und Abtastelement, sondern durch elektronische Schalter im Signalweg zu dem Abtastelement bestimmt werden.

## Claims

1. A method of recording a signal on a recording medium in the form of tape, particularly for a digital signal on a magnetic tape (1), wherein portions of track (S), which are short in comparison with the length of the medium (1) and succeed one another in time, lie side by side on the medium (1) and the portions of track (S1–S4) extend substantially parallel to the edge of the medium and lie side by side in the direction (6) transverse to the edge (3) of the medium in such a manner that the boundary lines (4, 5) of the blocks (B) of portions of track (S1–S4) formed are aligned perpendicular or substantially perpendicular to the edge (3) of the medium, the scanning elements effecting the recording and/or reproduction being disposed at the circumference of a cylindrical rotating drum round which the medium is wrapped, characterised in that the angle of rotation of the heads (K) during which the recording operation of a portion of track (S) is effected, is offset from one portion of track to another within a block by such an amount that the offsetting of successive portions of track (S) in their longitudinal direction resulting in itself from the longitudinal feed of the medium (1) is compensated and these portions of track lie substantially side by side on the medium (1) without offsetting in the longitudinal direction of the medium.

2. A method according to Claim 1, characterised in that the drum (11) is wrapped round by the medium (1) only over a portion (180°) of its circumference.

3. A method according to Claim 1, characterised in that the drum (11) contains a plurality of heads (K1–K4) distributed over the circumference.

4. A method according to Claim 1, characterised in that the drum (11) or the head wheel is adjusted in the direction of its axis (12) relative to the medium (1) during the scanning of the portions of track (S).

5. A method according to Claim 4, characterised in that the range over which the adjustment is effected is variable so that only the portions of track over a selected portion of the width of the medium (1) are scanned.

6. A method according to Claim 1, characterised in that provided one behind the other in the direction of the portion of track (S) are two scanning elements of which the first is fed with a signal for a recording operation and the second acts as a reproduction element, and the presence of the signal at the output of the second scanning element serves as a criterion for the existence of contact between scanning element and medium.

7. A method according to Claim 1, characterised in that the recording is effected with different azimuth angles from one portion of track to the next.

8. A method according to Claim 1, characterised in that a track readjustment is provided which ensures a precise position of the scanning element in relation to the portion of track at the end of each portion of track (S).

9. A method according to Claim 4, characterised in that a lifting magnet (20) is provided for the axial adjustment of the head carrier member (15).

10. A method according to Claim 1, characterised in that only about half the angle of the wrap-round angle is used for the recording and/or reproduction of a portion of track (S).

11. A method according to Claim 1, characterised in that, during the recording of portions of track (S), the beginning and the end of a portion of track (S) are determined not by the temporal beginning and the temporal end of the contact between medium and scanning element but by electronic switches in the signal path to the scanning element.

## Revendications

1. Procédé pour enregistrer un signal sur un support d'enregistrement en forme de bande, notamment pour un signal numérique sur une bande magnétique (1), selon lequel des sections de pistes (S), qui se succèdent dans le temps et sont courtes vis-à-vis de la longueur du support (1), sont disposées côte-à-côte sur ce support (1) et les sections de pistes (S1–S4) s'étendent approximativement parallèlement au bord du support et en étant disposées côte-à-côte dans une direction (6) transversale par rapport au bord (3) du support, de telle sorte que les lignes de délimination (4, 5) des blocs formés (B) de sections de pistes (S1–S4) sont perpendiculaires ou approximativement perpendiculaires au bord (3) du support, les éléments d'exploration réalisant l'enregistrement et/ou la lecture étant disposés sur le pourtour d'un tambour cylindrique rotatif, qui est entouré par le support, caractérisé en ce que, lorsque les têtes (K) réalisent l'opération d'enregistrement dans une section de piste (S), l'angle de rotation des têtes est décalé d'une section de piste à la suivante à l'intérieur d'un bloc, d'une valeur telle que le décalage, qui apparaît en soi sous l'effet de l'avance longitudinale du support (1), de l'élément de piste (S) successif est compensé dans la direction en longueur de cet élément de piste et que ces derniers sont disposés approximativement côte-à-côte sur le support (1), sans décalage dans la direction longitudinale de ce dernier.

2. Procédé selon la revendication 1, caractérisé en ce que le tambour (11) est entouré par le support (1) uniquement sur une partie (180°) de sa circonférence.

3. Procédé selon la revendication 1, caractérisé en ce que le tambour (11) contient plusieurs têtes (K1–K4) réparties sur la circonférence.

4. Procédé selon la revendication 1, caractérisé en ce que le tambour (11) ou le disque porte-têtes est déplacé dans la direction de son axe (12) par rapport au support (1), pendant l'exploration des éléments de pistes (S).

5. Procédé selon la revendication 4, caractérisé en ce que l'étendue, sur laquelle s'effectue le déplacement, est modifiable de sorte que seuls les éléments de pistes situés dans une partie sélectionnée de la largeur du support (1) sont explorés.

6. Procédé selon la revendication 1, caractérisé en ce qu'il est prévu l'un derrière l'autre, dans la direction de l'élément de piste (S), deux éléments d'exploration, dont le premier est alimenté par un signal pour réaliser l'opération d'enregistrement et dont le second agit à la manière d'un élément laser, et que la présence du signal à la sortie du second élément d'exploration est utilisé comme critère de l'existence d'un contact entre l'élément d'exploration et le support.

7. Procédé selon la revendication 1, caractérisé en ce que l'enregistrement d'un élément de piste au suivant s'effectue avec un angle azimutal différent.

8. Procédé selon la revendication 1, caractérisé en ce qu'il est prévu une régulation d'asservissement de piste, qui garantit, respectivement à la fin d'un élément de piste (S), une position précise de l'élément d'exploration par rapport à l'élément de piste.

9. Procédé selon la revendication 4, caractérisé en ce que pour le déplacement axial de l'élément (15) du porte-têtes, il est prévu un aimant de levage (20).

10. Procédé selon la revendication 1, caractérisé en ce que pour l'enregistrement et/ou la lecture d'un élément de piste (S), on utilise un angle égal seulement approximativement à la moitié de l'angle d'enroulement.

11. Procédé selon la revendication 1, caractérisé en ce que lors de l'enregistrement d'éléments de pistes (S), le début et la fin d'un élément de piste (S) sont déterminés non pas par le début et la fin, dans le temps, du contact entre le support et l'élément d'exploration, mais par des interrupteurs électroniques situés dans la voie de transmission du signal aboutissant à l'élément d'exploration.

Fig.1

Fig.2

Fig.3

Fig.4

a) Anfangsphase =0°

b) Anfangsphase =22,5°

c) Anfangsphase =45°

d) Anfangsphase =67,5°

e) Anfangsphase =0°

112,5°

90°-22,5°

K1

K2

12

K4

2

K3

11

1

a) Anfangsphase = 112,5°

90°-22,5°

90°

K2

K3

K1

K4

b) Anfangsphase = 90°

67,5°

90°-22,5°

K3

K2

K4

K1

c) Anfangsphase = 67,5°

90°-22,5°

45°

K4

K3

K1

K2

d) Anfangsphase = 45°

112,5°

90°-22,5°

K4

K1

K3

K2

e) Anfangsphase = 112,5°

Fig. 5

$\gamma_1$

$90° - \delta\varphi$

K1
K2 K4
K3

a) Anfangsphase

$$\gamma_1 = 90° + \delta\varphi$$

$\gamma_2$

$90° - \delta\varphi$

K2
K3 K1
$\delta\varphi$
K4

b) $\gamma_2 = \gamma_1 - \delta\varphi = 90°$

$\gamma_n$

$90° - \delta\varphi$

$(n-1)^*$

c) $\gamma_n = \gamma_1 - (n-1)^* \delta\varphi$
$= 90° - (n-2)^* \delta\varphi$

$359^* \delta\varphi = 90 - \delta\varphi$

$90° - \delta\varphi$

K1
K4 K2
K3

$\gamma_{360} = 2\, \delta\varphi$

d) $\gamma_{360} = 2^* \delta\varphi$

$\gamma_1$

$90° - \delta\varphi$

K4
K3 K1
K2

e) $\gamma_1 = 90° + \delta\varphi$

Fig.6

Fig.7

Fig. 8

Fig.9

Fig.10

Fig.11

Fig.12

Fig.13 A

Fig.13 B

Fig.13C